# EUROPEAN PATENT APPLICATION

(11) **EP 1 720 343 A1**
(43) Date of publication of application: **08.11.2006**
(21) Application number: 05719857.4
(22) Date of filing: 24.02.2005
(51) Int. Cl.: H04N 5/335

(54) **DEFECTIVE PIXEL DETECTION DEVICE AND METHOD, AND IMAGING DEVICE**

(30) Priority: 27.02.2004 JP 2004053044
(71) Applicant: Olympus Corporation, Tokyo 151-0072 (JP)
(72) Inventor: NAITO, Yukihiro, 1920914 (JP)
(74) Representative: von Hellfeld, Axel
(86) International application number: PCT/JP2005/003542
(87) International publication number: WO 2005/084015

(57) **Abstract**

An output signal of a CCD or other solid-state imaging device (101) is converted at an A/D converter (102) into a digital signal, which is in turn loaded in a latch (103). The latch (103) comprises a delay unit, a line memory, etc. to hold pixel data demanded by a defective pixel detection algorithm. A normal pixel detection block (104) is adapted to receive a signal from the A/D converter (102) to determine whether the pixel to be inspected is a normal one or a possibly defective one, and send out the result of determination to a defective pixel detection block (105). When the pixel to be inspected is determined as defective, a defective pixel correction block (106) is operable to implement correction processing, producing a correction output (107).

## Description

### TECHNICAL ART

The present invention relates to a defective pixel detector, a defective pixel detection process and an imaging system, which are all capable of detecting, during taking operation, defective pixels contained in pixel signals produced out of a CCD image sensor or other solid-state imaging device.

### BACKGROUND ART

A problem with cameras using solid-state imaging devices with a lot more pixels is that the frequency of occurrence of defective pixels grows high. If such defective pixels are detected and corrected, then it is possible to improve on the yields of solid-state imaging devices and cut down the cost of imaging systems. JP(A)7-162757 shows a technique of inspecting locations of defective pixels beforehand at factory shipment and holding the results in a memory, thereby identifying the defective pixel locations. JP(A)'s 6-205302, 6-292091 and 2002-10274 each discloses a technique of real-time detection of defective pixels from output signals of solid-state imaging devices without holding defective pixel locations in memories. These techniques have the advantages of dispensing with factory-shipped inspection of defective pixel locations and being capable of even defective pixels occurring after shipment, as set forth in JP (A) 7-162757.

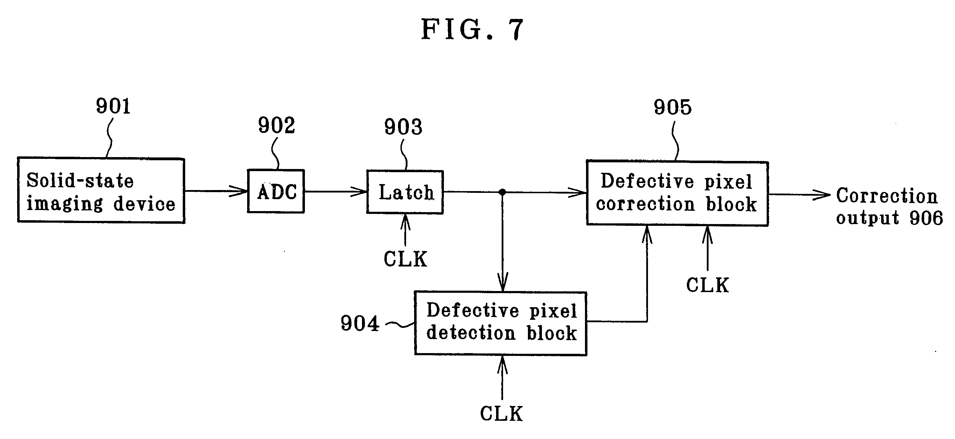

Fig. 7 is a block diagram illustrative of the prior art technique set forth in JP(A)6-292091 for real-time detection of defective pixels. An output signal from a CCD or other solid-stage imaging device 901 is converted by an A/D converter 902 into a digital signal that is then loaded in a latch 903. The latch 903 comprises delay units, line memories, etc., and is adapted to hold the pixel data demanded by a defective pixel detection algorithm. A defective pixel detection block 904 is operable to determine whether a certain pixel is defective or not and send out the result of determination to a defective pixel correction block 905. The defective pixel correction block 905, at which the pixel determined as defective is corrected using a neighboring pixel or pixels, is operable to produce the result of correction in the form of a correction output 906. Tuned clock signals CLK are entered in the latch 903, defective pixel detection block 904 and defective pixel correction block 905. Note here that the clock signal entered in the A/D converter 902 is not shown.

As set forth in JP(A)6-292091, however, possible problems with the technique of the real-time detection of defective pixels are a "detection error" that causes a failure in detection of defective pixels, and a "false detection" that determines normal pixels incorrectly as defective ones. To hold back image degradation by these, it is necessary to make the defective pixel algorithm sophisticated, resulting in another problem such as increases in the quantity of computation and power consumption.

In view of such problems with the prior art as described above, the invention has for its object the provision of a defective pixel detector, a defective pixel detection process and an imaging system, which are all capable of real-time detection of defective pixels in lower quantities of computation and more reduced power consumption.

### DISCLOSURE OF THE INVENTION

To attain the above object, the present invention provides a defective pixel detector adapted to detect a defective pixel contained in pixel data produced out of a solid-state imaging device, characterized by comprising a normal pixel detection means for detecting out a normal pixel from said pixels, and a defective pixel detection means for detecting a defective pixel out of pixels that are not factored out by said normal pixel detection means. Thus, according to the defective pixel detector of the invention, pixels highly unlikely to be defective are factored out at the normal pixel detection block and only a possibly defective pixel is inspected at the defective pixel detection block. By factoring out the pixels highly unlikely to be defective, it is thus possible to minimize the operating rate of the defective pixel detection block, so that the quantity of computation can be cut down with reduced power consumption.

The above defective pixel detector is further characterized in that said normal pixel detection means comprises a level difference calculation means adapted to calculate a level difference between the pixel to be inspected and an neighboring pixel, and a comparison means adapted to compare said level difference with a first threshold, so that when said level difference is less than said first threshold, the pixel to be inspected is determined as normal. In such an embodiment of the invention, the level difference lying between the pixel to be inspected and one neighboring pixel is compared with the threshold for detecting normal pixels. At the normal pixel detection block of simpler construction, the pixels highly unlikely to be defective can be factored out, so that the effects on cutting down the quantity of computation and reducing power consumption are achievable.

The above defective pixel detector is further characterized in that said normal pixel detection means comprises a level difference calculation means adapted to calculate level differences between the pixel to be inspected and a plurality of neighboring pixels, a comparison means adapted to compare each of said plurality of level differences calculated at said level difference calculation means with a first threshold, and a determination block adapted to calculate the number of neighboring pixels at which said level difference is less than said first threshold, and to compare the number of neighboring pixels calculated by said calculation with a second threshold, so that when said number of neighboring pixels is greater than said second threshold, the pixel to be inspected is determined as normal. With such an embodiment of the invention, pixels highly unlikely to be defective are factored out at the normal pixel detection block and only a possibly defective pixel is inspected at the defective pixel detection block. For the inspection of normal pixels, the level differences lying between the pixel to be inspected and the plurality of neighboring pixels are compared with the threshold. Thus, the normal pixel detection block of simpler construction enables pixels highly unlikely to be defective to be factored out, so that the quantity of computation can be cut down with reduced power consumption.

The above defective pixel detector is further characterized in that said normal pixel detection means has a memory for holding the pixel to be inspected, which also works as a memory of said defective pixel detection means. In such an embodiment of the invention, a single common latch is used at the normal pixel detection block and the defective pixel detection block. Thus, the normal pixel detection block of simpler construction enables pixels highly unlikely to be defective to be factored out, so that the quantity of computation can be cut down with reduced power consumption. The shared use of the latch enables the normal pixel detection block to be slimmed down.

The above defective pixel detector of the invention is further characterized in that said defective pixel detection means advances to a low power consumption mode with clocks stopped when the pixel to be inspected is determined at said normal pixel detection means as normal. In such an embodiment of the invention, when the pixel to be inspected is determined at the normal pixel detection block as normal, clocks are stopped, so that the defective pixel detection block advances to the low power consumption mode. That is, while the normal pixel detection block is operable to factor out pixels highly unlikely to be defective, the defective pixel detection block is in the low power consumption mode, so that the power consumption of the whole detector can be minimized.

The invention also provides a defective pixel detection process, characterized by comprising the steps of:
detecting a normal pixel out of pixel data produced out of a solid-state imaging device,
factoring out said detected normal pixel, and
detecting a defective pixel out of pixels from which said normal pixel has been factored out. Thus, pixels highly unlikely to be defective are factored out at the normal pixel detection block and only a possibly defective pixel is inspected at the defective pixel detection block. For this reason, computing operation can be performed at faster speed and in a shorter period of time than could be possible with an arrangement for inspecting all pixels about whether they are defective or not.

The above defective pixel detection process is further characterized in that at the step of detecting said normal pixel, a level difference between the pixel to be inspected and a neighboring pixel is calculated, and the level difference calculated by said calculation is compared with a first threshold, so that the pixel to be inspected is determined as normal when, as a result of said comparison, the level difference is less than the first threshold. By simple computation such that said level difference is compared with the first threshold, the pixel to be inspected is determined as normal; it is never passed over to the defective pixel detection. Thus, it is possible to make the whole processing time shorter.

The above defective pixel detection process is further characterized in that at the step of detecting said normal pixel, level differences between the pixel to be inspected and a plurality of neighboring pixels are calculated; said plurality of level differences found by said calculation are each compared with a first threshold; from results of said comparisons, the number of neighboring pixels at which said level differences are less than said first threshold is calculated; and the number of neighboring pixels found by said calculation is compared with a second threshold, so that when said number is greater than said second threshold, the pixel to be inspected is determined as normal. Thus, said level differences are compared with the first threshold, and said number of neighboring pixels is compared with the second threshold, so that the pixel to be inspected is determined as normal on the basis of the results of such comparisons; it is possible to improve on the precision of determination and the reliability of defective pixel detection.

Further, the invention provides an imaging system comprising a defective pixel detector adapted to detect a defective pixel contained in pixel data produced out of a solid-state imaging device, characterized in that said defective pixel detector comprises a normal pixel detection means for detecting out a normal pixel from said pixels, and a defective pixel detection means for detecting a defective pixel out of pixels that are not factored out by said normal pixel detection means. Thus, the inventive imaging system is operable to factor out pixels highly unlikely to be defective. It is thus possible to minimize the operating rate of the defective pixel detection block and achieve effects on decreases in the quantity of computation and lower power consumption.

The above imaging system is further characterized in that said normal pixel detection means comprises a level difference calculation means adapted to calculate a level difference between the pixel to be inspected and an neighboring pixel, and a comparison means adapted to compare said level difference with a first threshold, so that when said level difference is less than said first threshold, the pixel to be inspected is determined as normal. In this embodiment of the invention, pixels highly unlikely to be defective are factored out by the normal pixel detection block of simpler construction. It is thus possible to achieve effects on decreases in the quantity of computation implemented, and the power consumed, by the imaging system.

The above imaging system is further characterized in that said normal pixel detection means comprises a level difference calculation means adapted to calculate level differences between the pixel to be inspected and a plurality of neighboring pixels, a comparison means adapted to compare each of said plurality of level differences calculated at said level difference calculation means with a first threshold, and a determination block adapted to use the result of comparison at said comparison means to calculate the number of neighboring pixels at which said level difference is less than said first threshold, and to compare the number of neighboring pixels calculated by said calculation with a second threshold, so that when said number of neighboring pixels at which the said level difference is greater than said first threshold is greater than said second threshold, the pixel to be inspected is determined as normal. With this embodiment of the invention, it is possible to defect defective pixels with high accuracy and improve on the reliability of the imaging system.

### BRIEF EXPLANATION OF THE DRAWINGS

Fig. 1 is a block diagram illustrative of the first embodiment of the invention.
Fig. 2 is a block diagram illustrative of one exemplary construction of the latch.
Fig. 3 is a block diagram illustrative of one exemplary construction of the normal pixel detection block.
Fig. 4 is a block diagram illustrative of another exemplary construction of the normal pixel detection block.
Fig. 5 is a block diagram illustrative of the second embodiment of the invention.
Fig. 6 is a flowchart illustrative of the third embodiment of the invention.
Fig. 7 is a block diagram illustrative of a typical prior art.

### BEST MODE FOR CARRYING OUT THE INVENTION.

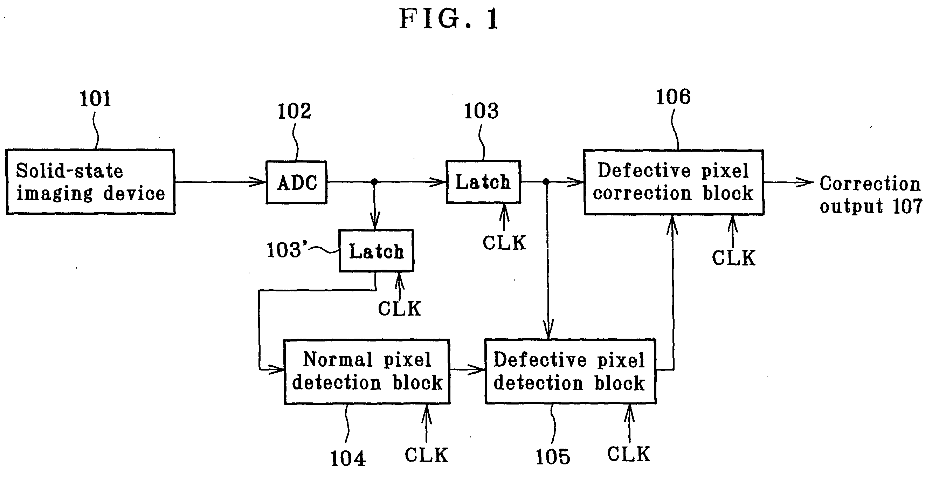

Embodiments of the invention are now explained with reference to the drawings. Fig. 1 is a block diagram illustrative of the arrangement of the first embodiment according to the invention. In Fig. 1, an output signal from a solid-state imaging device 101 such as a CCD is converted by an A/D converter 102 into a digital signal that is then loaded in a latch 103. The latch 103 comprises a delay unit D, a line memory, etc., and is adapted to hold the pixel data demanded by a defective pixel detection algorithm. A latch 103', too, comprises a delay unit D, a line memory, etc., and is adapted to receive an output digital signal from the A/D converter 102. A normal pixel detection block 104 is adapted to receive an output signal from the latch 103' to make simple determination of whether the pixel to be inspected is a normal one or a possibly defective one, and send out the result of determination to a defective pixel detection block 105. The defective pixel detection block 105 makes determination of whether only a pixel - that is not determined by the normal pixel detection block 194 as normal - is normal or defective, using the pixels held in the latch 103. The result of determination is sent out to a defective pixel correction block 106, where if that pixel is determined as defective, it is corrected into a correction output 107. Tuned clock signals CLK are entered in the latch 103, latch 103', normal pixel detection block 104, defective pixel detection block 105 and defective pixel correction block 106.

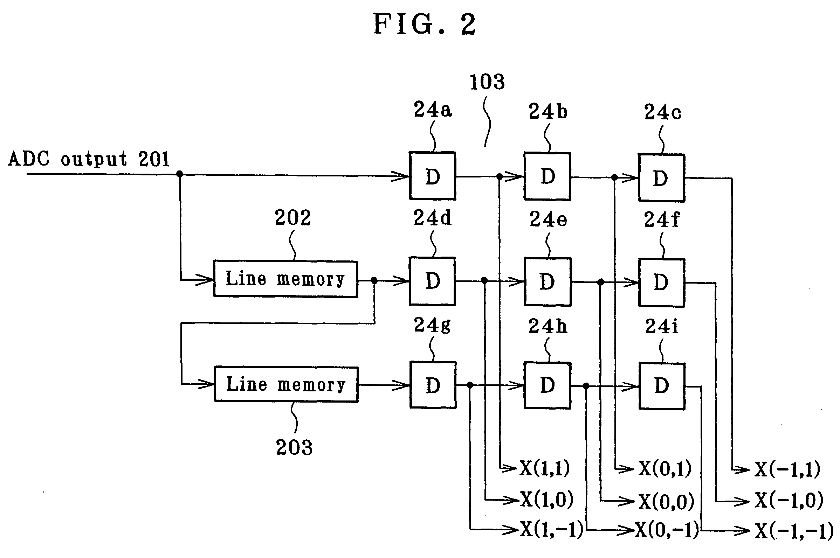

Fig. 2 is a block diagram illustrative of one exemplary arrangement of the latch 103. The latch 103 depicted in Fig. 2 is an example wherein a detection algorithm for the defective pixel detection block 105 and a correction algorithm for the defective pixel-correction block 106 require 3×3 pixels neighboring on the pixel to be inspected as an input. Out of an A/D converter output 201, the 3×3 pixels neighboring on the pixel to be inspected are held in delay units D each adapted to hold one pixel and line memories 202, 203 adapted to hold one-line pixels. Nine delay units D are arrayed as indicated at 24a to 24i. The delay units 24a to 24c are adapted to receive the A/D converter output 201 as it stands; the delay units 24d to 24f are adapted to receive the A/D converter output 201 via the line memory 202; and the delay units 24g to 24i are adapted to receive the A/D converter output 201 via the line memories 202, 203. In the embodiment of Fig. 2, for instance, the pixel to be inspected is indicated by X(0, 0), a neighbor to the right of it is indicated by X(1, 0), and a neighbor just above it is indicated by X(0, -1). Because the pixel data are produced via the delay units 24a to 24i, however, it is noted that when the pixel to be inspected is indicated by X(0, 0), the neighbors to the left and right of, and just above and below, it are indicated as flipped over in position.

Referring back to Fig. 1, at the normal pixel detection block 104 in which the A/D converter output 201 is entered as an input, whether the pixel to be inspected is a normal one or a possibly defective one is simply determined, and the result of determination is sent out to the defective pixel detection block 105. At the normal pixel detection block 104, a level difference between the pixel to be inspected and a neighbor is so calculated that whether it is a normal one or a possibly defective one is determined on the basis of the presence of a neighbor having a level difference less than a given threshold.

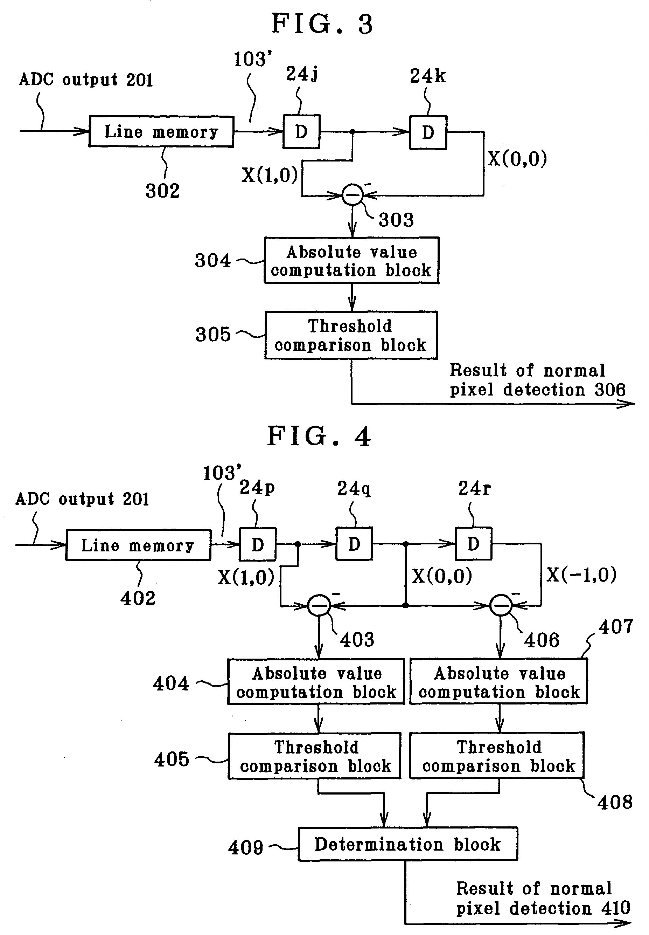

Fig. 3 is a block diagram illustrative of one embodiment of the invention. Specifically, Fig. 3 is illustrative of one exemplary arrangement of the normal pixel detection block adapted to use for determination a level difference between the pixel to be inspected and one neighboring pixel. How the normal pixel detection block 104 operates is now explained more specifically with reference to Fig. 3. A latch 103' comprises a line memory 302 and delay units D indicated by 24j and 24k. The latch 103' holds the pixel X(0, 0) to be inspected and a neighbor X(1, 0) to the right of it. At a differential computation unit 303 and an absolute value computation block 304, the absolute value of a difference between these pixel values is calculated. Then, at a threshold comparison block 305, the absolute value of that difference is compared with a preset threshold. If that absolute value is less than that threshold, then the pixel to be inspected is determined as normal. If the absolute value of the difference is greater than the threshold, then that pixel is determined as possibly defective. This is here supposed to be the result of normal pixel detection 306.

Fig. 4 is a block diagram illustrative of another exemplary arrangement of the normal pixel detection block 104. Specifically, Fig. 4 is illustrative of the arrangement where level differences between the pixel to be inspected and two neighbors are used for determination. In this arrangement, a latch 103' comprises a line memory 402 and delay units D indicated by 24p to 24r. By the latch 103', the pixel to be inspected X(0, 0) and right and left neighbors X(1, 0) and X(-1, 0) are held. At a differential computation unit 403 and an absolute value computation block 404, a level difference between the pixel to be inspected and the right neighbor is calculated for comparison with the preset first threshold at a threshold comparison block 405. At a differential computation unit 406 and an absolute value computation block 407, a level difference between the pixel to be inspected and the left neighbor is calculated for comparison with the preset first threshold at a threshold comparison block 408. At a determination block 409, the number of neighbors in the case where the level difference between the pixel to be inspected and each neighbor is less than the threshold is calculated, and if this is greater than the preset second threshold, then the pixel to be inspected is determined as normal; this is here supposed to be the result of normal pixel detection 410. With the second threshold set at 1, if the level difference with either one of the left and right neighbors is less than the second threshold, then the pixel to be inspected is determined as normal. With the second threshold set at 2, if the level difference with both the left and right neighbors is less than the second threshold, then the pixel to be inspected is determined as normal. In the embodiment of Fig. 4, there are two-stage determination means used, i.e., the threshold comparison blocks 405 and 408, and the determination block 409. For this reason, the precision of determination of normal pixels is improved with the result that its reliability is much more enhanced.

Referring again to Fig. 1, at the defective pixel detection block 105, only the pixel - that is not determined at the normal pixel detection block 104 as normal - is determined about whether it is normal or not, using the pixels held in the latch 103. The detection algorithm used here is a known one using a set of 3×3 pixels neighboring on the pixel to be inspected. Note that an algorithm that needs pixels in an area larger than the 3×3 pixel set, too, may be used if the latch 103 is modified. Regarding a pixel that is determined at the normal pixel detection block 104 as normal, the defective pixel detection block 105 advances to a low power consumption mode where, for instance, the clocks CLK are stopped, without implementing the defective pixel detection operation. In this case, the power source for an oscillator that is a clock CLK generation source is put off in such a way as to stop feeding clocks CLK to the latch 103, normal pixel detection block 104, defective pixel detection block 105 and defective pixel correction block 106, so that power consumption can be minimized. The result of detection at the defective pixel detection block 105 is sent out to the defective pixel correction block 106 where the pixel determined as defective is corrected using neighboring pixels to produce a correction output 107. The correction algorithm used here may be a known one using pixels an area loaded in the latch 103. Note, however, that an algorithm that needs pixels in an area larger than demanded by the defective pixel detection block, too, could be utilized if the latch 103 is modified.

In the embodiment of the invention as described above, pixels highly unlikely to be defective are factored out at the normal pixel detection block 104 of simpler construction. It is thus possible to minimize the operating rate of the defective pixel detection portion 105 and, consequently, reduce the quantities of computation and power consumption.

In the instant embodiment of the invention, while a neighbor to the left of the pixel to be inspected, and neighbors on both sides of it are used as comparative reference pixels at the normal pixel detection block 104, it is understood that the invention is never limited to them. For instance, it is possible to make use of neighboring pixels diagonally above the pixel to be inspected, or even neighboring pixels around neighbors on it. It is also understood that this embodiment of the invention may be easily extended to as far as a single-plate color imaging device with a CFA (color filter array) mounted on it. In that case, comparative reference pixels at the normal pixel detection block 104 could be equal in color to the pixel to be inspected, and comparative thresholds could have a common value to, or individual values for, the respective colors.

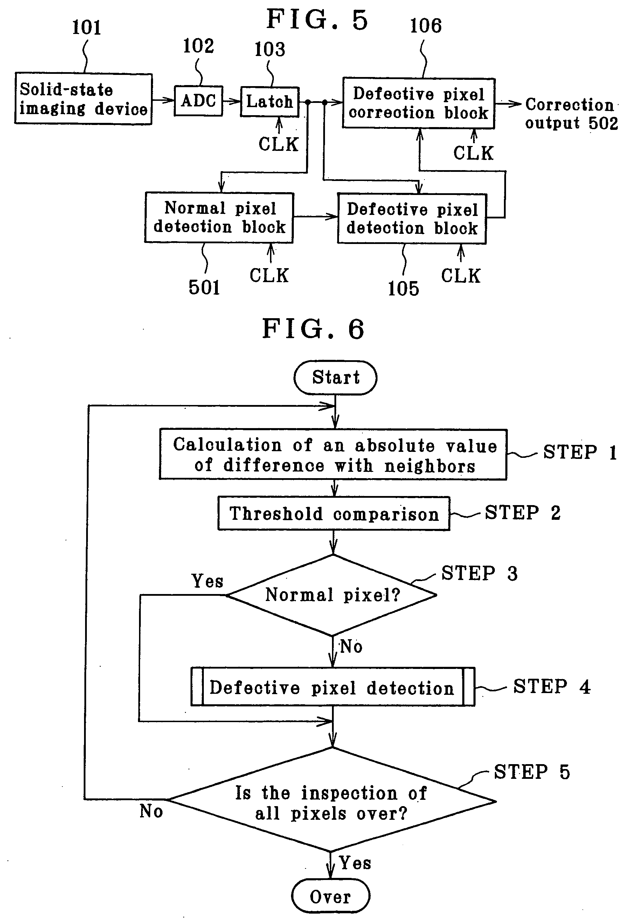

Fig. 5 is a block diagram illustrative of the arrangement of another embodiment according to the invention. The same components as in Fig. 1 are indicated by the same references, and so their detailed accounts are omitted. In the arrangement of Fig. 5, at a normal pixel detection block 501, the pixel to be inspected and neighboring pixels, loaded in the latch 103, are used as inputs to make simple determination of whether the pixel to be inspected is a normal one or a possibly defective one, and the result of determination is then sent out to the defective pixel detection block 105. In the embodiment of Fig. 5, the normal pixel detection block 501 and the defective pixel detection block 105 have thus the shared latch 103. At the defective pixel detection block 105, whether or not only the pixel - that is not determined at the normal pixel detection block 501 as normal - is a defective one is determined using the pixels held in the latch 103, and the result of determination is sent out to the defective pixel correction block 106. If that pixel is determined as defective, then it is corrected to produce a correction output 502.

In the instant embodiment, at the normal pixel detection block 501, whether the pixel loaded in the latch 103 is normal or possibly defective is determined. Thus, the normal pixel detection block 501 is operable to make simple determination of whether the pixel to be inspected is normal or possibly defective, and send out the result of determination to the defective pixel detection block 105. The normal pixel detection block 501 has the construction of Figs. 3 and 4, from which the delay units D and line memories 302 and 402 are detached. Thus, the normal pixel detection block 501 and the defective pixel detection block 105 have a shared latch so that the whole detector system can be slimmed down. As in the first embodiment of the invention, the defective pixel detection block 105 is operable to make determination of whether only the pixel not determined at the normal pixel detection block 501 as normal is determined as normal or defective. And then, the defective pixel correction block 106 is operable to make correction of the pixel determined as defective, using neighboring pixels, thereby producing a correction output 502. In the embodiment of Fig. 5, the normal pixel detection block 501 and the defective pixel detection block 105 have the shared latch 103, so that the detector can be slimmed down, and memory resources can be effectively used as well.

In the embodiments of the invention as described above, the detection of defective pixels is supposed to be implemented in hardware; however, the invention is never limited to such hardware processing. In one possible arrangement, an output signal from a CCD or other solid-state imaging device 101 is converted by the A/D converter 102 into a digital signal, after which the pixel data stored in the memory (latch) is processed on a programmable processor such as a CPU or DSP. Fig. 6 is a flowchart illustrative of processing in software according to the invention. At step 1, the absolute value of a level difference between the pixel to be inspected and a neighbor is calculated. As explained with reference to the first embodiment of the invention, the neighbor could be a single one pixel or a plurality of pixels. At step 2, the ensuing absolute value is compared with the preset threshold. At step 3, from the result of comparison, whether the pixel to be inspected is a normal one or a possibly defective one is determined. With the neighbor set as a single one pixel, the pixel to be inspected is determined as normal when the level difference is less than the threshold. With the neighbors set as a plurality of pixels, the pixel to be inspected is determined as normal when the number of neighbors at which the level difference is less than the threshold is greater than the preset second threshold. If the pixel to be inspected is not determined as normal, then whether it is normal or defective is determined at step 4. The defective pixel detection at step 4 is implemented on a known algorithm. At step 5, whether or not the inspection of all pixels is over is determined. If not over, then back to step 1, the process is resumed to keep on the inspection of the next pixel to be inspected. If the inspection of all pixels has been over, then the process is over.

With the defective pixel detector and imaging system according to the invention, the normal pixel detection block of simpler construction is used to factor out pixels highly unlikely to be defective, thereby reducing the operating rate of the defective pixel detection block. This in turn will enable the quantity of computation to be cut down and the power consumption of the whole system to be minimized. The use of the shared latch will also enable the normal pixel detection block to be slimmed down. Further, with the defective pixel detection process of the invention, computation for defective pixel detection can be implemented at faster speed and, therefore, in a shorter period of time yet with more increased computation precision.

### POSSIBLE APPLICATIONS IN THE INDUSTRY

According to the invention as described above, it is possible to provide a defective pixel detector, a defective pixel detection process, and an imaging system, which, during taking operation, can detect defective pixels contained in pixel signals produced out of solid-state imaging devices.

## Claims

1. A defective pixel detector adapted to detect a defective pixel contained in pixel data produced out of a solid-state imaging device, **characterized by** comprising a normal pixel detection means for detecting out a normal pixel from said pixels, and a defective pixel detection means for detecting a defective pixel out of pixels that are not factored out by said normal pixel detection means.

2. A defective pixel detector as recited in claim 1, **characterized in that** said normal pixel detection means comprises a level difference calculation means adapted to calculate a level difference between the pixel to be inspected and an neighboring pixel, and a comparison means adapted to compare said level difference with a first threshold, so that when said level difference is less than said first threshold, the pixel to be inspected is determined as normal.

3. A defective pixel detector as recited in claim 1, **characterized in that** said normal pixel detection means comprises a level difference calculation means adapted to calculate level differences between the pixel to be inspected and a plurality of neighboring pixels, a comparison means adapted to compare each of said plurality of level differences calculated at said level difference calculation means with a first threshold, and a determination block adapted to calculate the number of neighboring pixels at which said level difference is less than said first threshold, and to compare the number of neighboring pixels calculated by said calculation with a second threshold, so that when said number of neighboring pixels is greater than said second threshold, the pixel to be inspected is determined as normal.

4. A defective pixel detector as recited in any one of claims 1 to 3, **characterized in that** said normal pixel detection means has a memory for holding the pixel to be inspected, which also works as a memory of said defective pixel detection means.

5. A defective pixel detector as recited in any one of claims 1 to 4, **characterized in that** said defective pixel detection means advances to a low power consumption mode with clocks stopped when the pixel to be inspected is determined at said normal pixel detection means as normal.

6. A defective pixel detection process, **characterized by** comprising the steps of:
detecting a normal pixel out of pixel data produced out of a solid-state imaging device,
factoring out said detected normal pixel, and
detecting a defective pixel out of pixels from which said normal pixel has been factored out.

7. A defective pixel detection process as recited in claim 6, **characterized in that** at the step of detecting said normal pixel, a level difference between the pixel to be inspected and a neighboring pixel is calculated, and the level difference calculated by said calculation is compared with a first threshold, so that the pixel to be inspected is determined as normal when, as a result of said comparison, the level difference is less than the first threshold.

8. A defective pixel detection process as recited in claim 6, **characterized in that** at the step of detecting said normal pixel, level differences between the pixel to be inspected and a plurality of neighboring pixels are calculated; said plurality of level differences found by said calculation are each compared with a first threshold; from results of said comparisons, the number of neighboring pixels at which said level differences are less than said first threshold is calculated; and the number of neighboring pixels found by said calculation is compared with a second threshold, so that when said number is greater than said second threshold, the pixel to be inspected is determined as normal.

9. An imaging system comprising a defective pixel detector adapted to detect a defective pixel contained in pixel data produced out of a solid-state imaging device, **characterized in that** said defective pixel detector comprises a normal pixel detection means for detecting out a normal pixel from said pixels, and a defective pixel detection means for detecting a defective pixel out of pixels that are not factored out by said normal pixel detection means.

10. An imaging system as recited in claim 9, **characterized in that** said normal pixel detection means comprises a level difference calculation means adapted to calculate a level difference between the pixel to be inspected and an neighboring pixel, and a comparison means adapted to compare said level difference with a first threshold, so that when said level difference is less than said first threshold, the pixel to be inspected is determined as normal.

11. An imaging system as recited in claim 9, **characterized in that** said normal pixel detection means comprises a level difference calculation means adapted to calculate level differences between the pixel to be inspected and a plurality of neighboring pixels, a comparison means adapted to compare each of said plurality of level differences calculated at said level difference calculation means with a first threshold, and a determination block adapted to use the result of comparison at said comparison means to calculate the number of neighboring pixels at which said level difference is less than said first threshold, and to compare the number of neighboring pixels calculated by said calculation with a second threshold, so that when said number of neighboring pixels at which the said level difference is less than said first threshold is greater than said second threshold, the pixel to be inspected is determined as normal.
